# EUROPEAN PATENT SPECIFICATION

(11) **EP 4 527 581 B1**
(45) Date of publication and mention of the grant of the patent: **02.12.2026**
(21) Application number: 24189773.5
(22) Date of filing: 19.07.2024
(51) Int. Cl.: B28B 21/88, B28B 21/90, B28B 7/34, C04B 35/565, C04B 35/80, B29C 33/48, B29C 53/82

(54) **DEFORMABLE MANDREL MADE OF AUXETIC MATERIAL AND METHOD OF FABRICATING A CERAMIC MATRIX COMPOSITE COMPONENT USING THE SAME**
VERFORMBARER DORN AUS AUXETISCHEN MATERIAL UND VERFAHREN ZUR HERSTELLUNG VON KERAMIKMATRIXVERBUNDSTOFFKOMPONENTEN UNTER VERWENDUNG DESSELBEN
MANDRIN DÉFORMABLE D'UN MATÉRIAU AUXÉTIQUE ET PROCÉDÉ DE FABRICATION DE COMPOSANTS COMPOSITES À MATRICE CÉRAMIQUE EN UTILISANT CELUI-CI

(30) Priority: 21.09.2023 US 202318371070
(43) Date of publication of application: 26.03.2025
(73) Proprietor: RTX Corporation, Farmington, CT 06032 (US)
(72) Inventor: WASSERMAN, David J., Hamden, 06517 (US); ROACH, James T., Vernon, 06066 (US)
(74) Representative: Dehns

(56) References cited:
- EP-A1- 4 119 772
- GB-A- 2 489 457
- US-A1- 2002 005 605
- US-A1- 2003 175 453
- US-A1- 2017 057 704
- US-A1- 2020 392 049
- US-A1- 2023 189 940

## Description

### BACKGROUND

The present invention relates to the fabrication of ceramic matrix composites (CMCs), and more particularly to improved tooling for CMC fabrication.

CMC parts are widely fabricated by densifying preforms made from woven fabrics or oriented/braided fiber tows. To keep a preform in a rigid form and maintain proper shape and geometry, specially designed tooling can be used to hold the preform during the initial densification cycle(s). Until the preform is adequately rigidized, the tooling must remain in contact with the preform to maintain integrity of the desired shape. In the case of hollow or cored CMC airfoil construction, the tooling which forms the internal surfaces (i.e., a mandrel) must remain inside the part until it is partially or fully rigidized. In some instances, an issue may arise when attempting to extract the mandrel after the component has been rigidized if the geometry is highly complex, or if substantial surface deviations exist. Thus, means for extracting mandrels from preforms without damaging the preforms and/or mandrels are desirable.

GB 2489457 A discloses gradient materials which display morphing behaviour under mechanical loading and pressures. Gradient foams may find use in a range of applications and devices, including deployable/removable core materials in composites manufacture.

US 2002/0005605 A1 discloses a method of fabricating a ceramic matrix composite (CMC) component and a core which is removed from a partially or fully densified CMC component by heating the component and core to a temperature at which the core deteriorates but below a temperature at which the component would melt or otherwise be damaged.

### SUMMARY

A method of fabricating a ceramic matrix composite component is provided according to claim 1.

A deformable mandrel for use in fabricating a ceramic vane preform is provided according to claim 11.

Features of embodiments of the invention are set forth in the dependent claims.

### BRIEF DESCRIPTION OF THE DRAWINGS

FIG. 1 is a schematic illustration comparing the properties of a non-auxetic material and an auxetic material.
FIG. 2 is a simplified side view of a vane preform supported by an auxetic mandrel.
FIG. 3 is a schematic cross-sectional illustration of a portion of the airfoil of the vane preform and auxetic mandrel.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the claims. The figures may not be drawn to scale, and applications and embodiments of the present invention may include features and components not specifically shown in the drawings.

### DETAILED DESCRIPTION

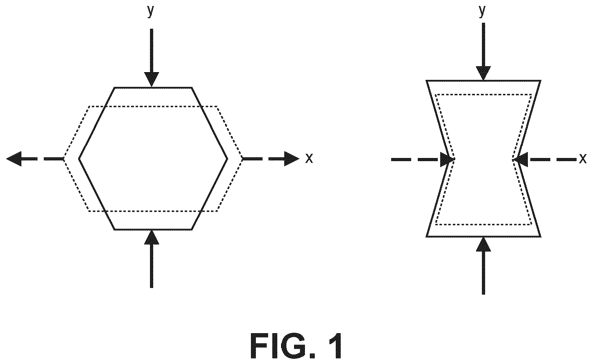

This disclosure presents auxetic tooling for use in the fabrication of CMC components. FIG. 1 schematically illustrates properties of a non-auxetic, or conventional material (left) and an auxetic material (right) under a compressive force. The non-auxetic material on the left has a positive Poisson's ratio such that, when a uniaxial compressive force is applied in the y-direction, the non-auxetic material compresses/contracts in y-direction and expands in an orthogonal direction (e.g., the x-direction). The opposite can also be true as a uniaxial stretching force in the y-direction causes expansion in the y-direction and contraction in the x-direction. Conversely, the auxetic material on the right has a negative Poisson's ratio such that, when a uniaxial compressive force is applied in the y-direction, the auxetic material contracts in both the y-direction and the x-direction. If a uniaxial stretching force is instead applied in the y-direction, the auxetic material expands in both the y-direction and the x-direction. Accordingly, auxetic tooling, such as mandrels, can be used with and more easily removed from complexly shaped preforms, such as airfoils, due to their unique properties.

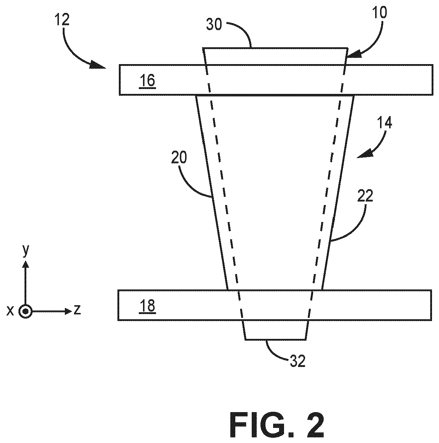

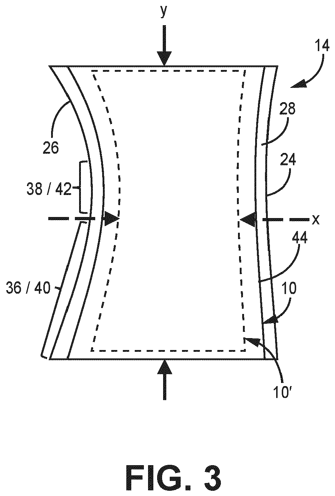

FIG. 2 is a simplified side view of auxetic mandrel 10 supporting ceramic vane preform 12. Portions of mandrel 10 are represented in dashed lines where internal to vane preform 12. Vane preform 12 includes airfoil 14 extending between first, outer diameter (OD) platform 16 and second, inner diameter (ID) platform 18. Airfoil 14 includes leading edge 20 and oppositely disposed trailing edge 22. Airfoil 14 further includes pressure sidewall 24 and oppositely disposed suction sidewall 26 (both shown and labeled in FIG. 3). Airfoil 14 may be complexly shaped with at least one internal cavity 28 (shown and labeled in FIG. 3) for improved aerodynamic performance. In an alternative embodiment, airfoil 14 can belong to a blade preform without departing from the scope of the invention. Vane preform 12 can be formed from fabrics, tapes, and/or braids of ceramic (e.g., silicon carbide) fibers arranged in various woven or non-woven architectures. The fibrous ceramic material can be laid up around/braided on mandrel 10 to form vane preform 12 in some embodiments.

Mandrel 10 can include first, OD end 30 and second, ID end 32 corresponding to the relative locations of OD and ID platforms 16 and 18. The external geometry of mandrel 10 can correspond to the internal geometry of airfoil 14 (i.e., cavity 28). A compressive force can be applied to ID and OD ends 30 and 32 (i.e., in the y-direction) to cause contraction of mandrel 10 in an orthogonal direction as is discussed in greater detail below. In an exemplary embodiment, mandrel 10 can be formed from graphene engineered for auxetic behavior. Due to the relatively high operational temperatures (i.e., above 1500 K) of graphene, mandrel 10 formed from graphene is ideally suited for use in a furnace/reactor, such as the type used in chemical vapor infiltration (CVI), melt infiltration (MI), and polymer infiltration and pyrolysis (PIP). Any of these methodologies can be used to densify vane preform 12 with a ceramic matrix. In such an embodiment, interconnected sheets of graphene can be 3D printed to form mandrel 10.

In an alternative embodiment, mandrel 10 can instead be formed from an engineered metal, polymer, ceramic, or composite material. Any auxetic material used with an operational temperature below that of the CVI, MI, or PIP processes (i.e., approximately 1700°C, 1450°C, or 1050°C, respectively) can be instead formed into a preforming mandrel 10, which can be used through the preforming process to support a preform prior to the application of interface coatings (e.g., of boron nitride) via CVI and/or densification via CVI, MI, and/or PIP. In yet another alternative embodiment, mandrel 10 can be a hybrid mandrel with portions formed from an auxetic material, and portions formed from a non-auxetic material (e.g., graphite, refractory metals, carbon-carbon composite).

FIG. 3 is a schematic cross-sectional illustration of a portion of airfoil 14 in which airfoil 14 is rotated roughly 90° from the view in FIG. 2 such that pressure sidewall 24 and suction sidewall 26 are visible, as well as airfoil inner cavity 28, in which mandrel 10 is disposed. Mandrel 10 can extend at least the full length (i.e., in the y-direction) of cavity 28. As shown in FIG. 3, suction sidewall 26 is curved (i.e., bowed) and mandrel 10 is correspondingly curved. Curvature creates flared region 36 in suction sidewall 26 which transitions into reduced thickness region 38, referring to the reduced distance between suction sidewall 26 and pressure sidewall 24. In order to sufficiently support airfoil 14, mandrel 10 includes a corresponding flared region 40 and reduced thickness region 42, referring to the reduced region between walls 44 of mandrel 10.

Referring back to FIG. 2 and with continued reference to FIG. 3, if mandrel 10 is extracted from cavity 28 in the positive y-direction (based on the coordinates shown in FIG. 2), flared region 40 of mandrel 10 is likely to contact/catch on reduced thickness region 38 of airfoil 14. In such a scenario, a conventional graphite mandrel could potentially damage the internal surfaces of airfoil 14 and/or fracture due to the brittle nature of graphite. However, with auxetic mandrel 10, a simultaneous compressive force can be applied to OD and ID ends 30 and 32 of mandrel 10 (i.e., in the y-direction) to cause mandrel 10 to contract in the x-direction, creating deformed mandrel 10', represented in FIG. 3 with dashed lines. Stated another way, mandrel 10' can be deformed by compression in the y-direction to have a reduced cross-sectional profile along the x-direction, including flared region 40, which is consequently narrower than reduced thickness region 38 of airfoil 14. This deformation facilitates its removal from cavity 28 without damage to vane preform 12 or mandrel 10. In general, mandrel 10 can remain in the deformed state (i.e., as mandrel 10') so long as the compressive force is applied. Further, it should be noted that mandrel 10 is generally removed from vane preform 12 after densification with a matrix using one of the methodologies listed above if fabricated from an appropriate material, but a preforming-type mandrel 10 can be removed prior to application of interface coatings, if applicable, or densification.

In one example, the uniaxial compressive force can be applied by hand, in particular for a relatively small vane preform 12. This can include an operator using both hands to apply the compressive force and extract mandrel 10' from inner cavity 28, as well as using a stationary object, such as a tabletop, to apply the compressive force at one end while the opposing compressive force is applied by hand. In a second example, a tool, and more specifically, a clamping tool (e.g., c-clamp, screw clamp, bar clamp, etc.) can be inserted through the hollow mandrel 10 and actuated to apply the compressive force. In an alternative embodiment, a clamping tool can be positioned externally to vane preform 12 to apply the uniaxial force to mandrel 10.

In an alternative embodiment, mandrel 10 can be engineered to have a reduced cross-sectional profile along the z-direction shown in FIG. 2 in response to an applied uniaxial compressive force in the y-direction. This can occur in addition to, or alternatively to the reduction in the x-direction as shown in FIG. 3 depending on the material selected. Leading edge 20 and/or trailing edge 22 can be complexly shaped (e.g., with tapering or curvature) creating correspondingly shaped surfaces of internal cavity 28. In such an embodiment, an applied uniaxial force in the y-direction can create a deformed mandrel 10' which is deformed along the z-direction.

The disclosed auxetic mandrel can be used in the fabrication of CMC components for use in aerospace, maritime, or industrial equipment, to name a few, non-limiting examples.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of fabricating a ceramic matrix composite component, the method comprising:
fabricating a ceramic preform (12), the preform (12) comprising a hollow portion with an internal cavity (28) extending along a first axis from a first end to a second end of the hollow portion, wherein the step of fabricating the ceramic preform (12) comprises laying up a ceramic material over an auxetic mandrel (10);
supporting the hollow portion with the auxetic mandrel (10) disposed within the internal cavity (28) and coaxial with the hollow portion, the auxetic mandrel (10) comprising a first mandrel end (30) and a second mandrel end (32);
at least partially densifying the preform (12) with a matrix; and
removing the auxetic mandrel (10) from the internal cavity (28) by:
simultaneously applying a compressive force to each of the first mandrel end (30) and the second mandrel end (32) creating a deformed auxetic mandrel (10') to reduce a cross-sectional profile of the auxetic mandrel (10) along a second axis orthogonal to the first axis; and
extracting the deformed auxetic mandrel (10') from the first end of the hollow portion,
wherein the preform (12) is a vane preform, wherein the hollow portion is an airfoil (14), wherein the airfoil (14) comprises a first sidewall (26), a second sidewall (24), and a reduced thickness region (38) therebetween, wherein the auxetic mandrel (10) comprises a flared region (40) corresponding to a flared region (36) of the first sidewall (26), and wherein in the deformed auxetic mandrel (10), a cross-sectional profile of the flared region (40) of the auxetic mandrel (10) is less than the reduced thickness region (38) of the airfoil (14).

2. The method of claim 1, wherein the step of removing the auxetic mandrel (10) from the airfoil (14) comprises moving the flared region (40) of the auxetic mandrel (10) through the reduced thickness region (38) of the airfoil (14).

3. The method of claim 1 or 2, wherein the ceramic material comprises silicon carbide fibers.

4. The method of any preceding claim, wherein the auxetic mandrel (10) is formed from graphene.

5. The method of any of claims 1 to 3, wherein the auxetic mandrel (10) is formed from one of a metal, a polymer, a ceramic, and a composite material.

6. The method of any preceding claim, wherein:
the step of at least partially densifying the preform (12) with a ceramic matrix is carried out using chemical vapor infiltration.

7. The method of any of claims 1 to 5, wherein:
the step of at least partially densifying the preform (12) with a ceramic matrix is carried out using polymer infiltration and pyrolysis or melt infiltration.

8. The method of any preceding claim, wherein:
the compressive force is applied to each of the first mandrel end (30) and the second mandrel end (32) by hand.

9. The method of any of claims 1 to 7, wherein:
the compressive force is applied to each of the first mandrel end (30) and the second mandrel end (32) using a tool.

10. The method of claim 9, wherein the tool is a clamp.

11. A deformable mandrel (10) for use in fabricating a ceramic vane preform (12), the vane preform having a hollow portion, and the hollow portion is an airfoil (14) comprising a first sidewall (26), a second sidewall (24), and a reduced thickness region (38) therebetween, the mandrel (10) comprising:
a body extending along a first axis between a first mandrel end (30) and a second mandrel end (32),
wherein the mandrel (10) comprises a flared region (40) corresponding to a flared region (36) of the first sidewall (26), and
wherein the body is formed from an auxetic material engineered to deform along a second axis orthogonal to the first axis when a uniaxial force is applied to the first mandrel end (30) and the second mandrel end (32) to reduce a cross-sectional profile of the flared region (40) of the mandrel (10) to less than the reduced thickness region (38).

12. The mandrel (10) of claim 11, wherein:
the auxetic material is graphene.

13. The mandrel (10) of claim 11, wherein:
the auxetic material is one of a metal, a polymer, a ceramic, and a composite.

14. The mandrel (10) of claim 11, 12 or 13, wherein the mandrel (10) is suitable for use in a furnace for at least one of a chemical vapor infiltration, polymer infiltration and pyrolysis, and melt infiltration process.

## Patentansprüche

1. Verfahren zur Herstellung einer keramischen Matrix-Verbundwerkstoffkomponente, wobei das Verfahren umfasst:
Herstellen eines Keramikvorformlings (12), wobei der Vorformling (12) einen hohlen Abschnitt
mit einem inneren Hohlraum (28) umfasst, der sich entlang einer ersten Achse von einem
ersten Ende zu einem zweiten Ende des hohlen Abschnitts erstreckt, wobei der Schritt des
Herstellens des Keramikvorformlings (12) das Aufbringen eines Keramikmaterials über
einem auxetischen Dorn (10) umfasst;
Stützen des hohlen Abschnitts mit dem auxetischen Dorn (10), der innerhalb des inneren
Hohlraums (28) angeordnet und koaxial zum hohlen Abschnitt ist, wobei der auxetische
Dorn (10) ein erstes Dornende (30) und ein zweites Dornende (32) umfasst;
zumindest teilweises Verdichten des Vorformlings (12) mit einer Matrix; und
Entfernen des auxetischen Dorns (10) aus dem inneren Hohlraum (28) durch:
gleichzeitiges Aufbringen einer Druckkraft auf jedes des ersten Dornendes (30) und
des zweiten Dornendes (32), wodurch ein verformter auxetischer Dorn (10') erzeugt
wird, um ein Querschnittsprofil des auxetischen Dorns (10) entlang einer zweiten,
zur ersten Achse orthogonalen Achse zu verringern; und
Herausziehen des verformten auxetischen Dorns (10') aus dem ersten Ende des
hohlen Abschnitts,
wobei der Vorformling (12) ein Schaufelvorformling ist, wobei der hohle Abschnitt ein Schaufelblatt (14)
ist, wobei das Schaufelblatt (14) eine erste Seitenwand (26), eine zweite Seitenwand (24) und einen
Bereich reduzierter Dicke (38) dazwischen umfasst, wobei der auxetische Dorn (10) einen aufgeweiteten
Bereich (40) umfasst, der einem aufgeweiteten Bereich (36) der ersten Seitenwand (26) entspricht, und
wobei bei dem verformten auxetischen Dorn (10) ein Querschnittsprofil des aufgeweiteten Bereichs (40)
des auxetischen Dorns (10) kleiner ist als der Bereich reduzierter Dicke (38) des Schaufelblatts (14).

2. Verfahren nach Anspruch 1, wobei der Schritt des Entfernens des auxetischen Dorns (10) aus dem
Schaufelblatt (14) das Bewegen des aufgeweiteten Bereichs (40) des auxetischen Dorns (10) durch
den Bereich reduzierter Dicke (38) des Schaufelblatts (14) umfasst.

3. Verfahren nach Anspruch 1 oder 2, wobei das Keramikmaterial Siliziumkarbidfasern umfasst.

4. Verfahren nach einem der vorhergehenden Ansprüche, wobei der auxetische Dorn (10) aus
Graphen gebildet ist.

5. Verfahren nach einem der Ansprüche 1 bis 3, wobei der auxetische Dorn (10) aus einem von einem
Metall, einem Polymer, einer Keramik und einem Verbundwerkstoff gebildet ist.

6. Verfahren nach einem der vorhergehenden Ansprüche, wobei:
der Schritt des zumindest teilweisen Verdichtens des Vorformlings (12) mit einer Keramikmatrix
mittels chemischer Gasphaseninfiltration durchgeführt wird.

7. Verfahren nach einem der Ansprüche 1 bis 5, wobei:
der Schritt des zumindest teilweisen Verdichtens des Vorformlings (12) mit einer Keramikmatrix
mittels Polymerinfiltration und Pyrolyse oder Schmelzinfiltration durchgeführt wird.

8. Verfahren nach einem der vorhergehenden Ansprüche, wobei:
die Druckkraft auf jedes des ersten Dornendes (30) und des zweiten Dornendes (32) von Hand
aufgebracht wird.

9. Verfahren nach einem der Ansprüche 1 bis 7, wobei:
die Druckkraft auf jedes des ersten Dornendes (30) und des zweiten Dornendes (32) mittels
eines Werkzeugs aufgebracht wird.

10. Verfahren nach Anspruch 9, wobei das Werkzeug eine Klemme ist.

11. Verformbarer Dorn (10) zur Verwendung bei der Herstellung eines keramischen Schaufelvorformlings (12), wobei der Schaufelvorformling einen hohlen Abschnitt aufweist, und der hohle Abschnitt ein
Schaufelblatt (14) ist, das eine erste Seitenwand (26), eine zweite Seitenwand (24) und einen Bereich
reduzierter Dicke (38) dazwischen umfasst, wobei der Dorn (10) umfasst:
einen Körper, der sich entlang einer ersten Achse zwischen einem ersten Dornende (30) und
einem zweiten Dornende (32) erstreckt,
wobei der Dorn (10) einen aufgeweiteten Bereich (40) umfasst, der einem aufgeweiteten
Bereich (36) der ersten Seitenwand (26) entspricht, und
wobei der Körper aus einem auxetischen Material gebildet ist, das so ausgelegt ist, dass es
sich entlang einer zweiten, zur ersten Achse orthogonalen Achse verformt, wenn eine
uniaxiale Kraft auf das erste Dornende (30) und das zweite Dornende (32) aufgebracht wird,
um ein Querschnittsprofil des aufgeweiteten Bereichs (40) des Dorns (10) auf weniger als
den Bereich reduzierter Dicke (38) zu verringern.

12. Dorn (10) nach Anspruch 11, wobei:
das auxetische Material Graphen ist.

13. Dorn (10) nach Anspruch 11, wobei:
das auxetische Material eines von einem Metall, einem Polymer, einer Keramik und einem
Verbundwerkstoff ist.

14. Dorn (10) nach Anspruch 11, 12 oder 13, wobei der Dorn (10) zur Verwendung in einem Ofen für
mindestens eines von einem chemischen Gasphaseninfiltrationsprozess, einem Polymerinfiltrations-
und Pyrolyseprozess sowie einem Schmelzinfiltrationsprozess geeignet ist.

## Revendications

1. Procédé de fabrication d'un composant en matériau composite à matrice céramique, le procédé comprenant :
la fabrication d'une préforme céramique (12), la préforme (12) comprenant une partie creuse comportant une cavité interne (28) s'étendant le long d'un premier axe d'une première extrémité à une seconde extrémité de la partie creuse, dans lequel l'étape de fabrication de la préforme céramique (12) comprend la pose d'un matériau céramique sur un mandrin auxétique (10) ;
le support de la partie creuse à l'aide du mandrin auxétique (10) disposé à l'intérieur de la cavité interne (28) et coaxial avec la partie creuse, le mandrin auxétique (10) comprenant une première extrémité de mandrin (30) et une seconde extrémité de mandrin (32) ;
la densification au moins partielle de la préforme (12) avec une matrice ; et
le retrait du mandrin auxétique (10) de la cavité interne (28) par :
l'application simultanée d'une force de compression sur chacune de la première extrémité de mandrin (30) et de la seconde extrémité de mandrin (32) créant un mandrin auxétique déformé (10') pour réduire un profil en coupe transversale du mandrin auxétique (10) le long d'un second axe orthogonal au premier axe ; et
l'extraction du mandrin auxétique déformé (10') depuis la première extrémité de la partie creuse,
dans lequel la préforme (12) est une préforme d'aube, dans lequel la partie creuse est un profil aérodynamique (14), dans lequel le profil aérodynamique (14) comprend une première paroi latérale (26), une seconde paroi latérale (24), et une région d'épaisseur réduite (38) entre celles-ci, dans lequel le mandrin auxétique (10) comprend une région évasée (40) correspondant à une région évasée (36) de la première paroi latérale (26), et dans lequel, dans le mandrin auxétique déformé (10'), un profil en coupe transversale de la région évasée (40) du mandrin auxétique (10) est inférieur à la région d'épaisseur réduite (38) du profil aérodynamique (14).

2. Le procédé de la revendication 1, dans lequel l'étape de retrait du mandrin auxétique (10) du profil aérodynamique (14) comprend le déplacement de la région évasée (40) du mandrin auxétique (10) à travers la région d'épaisseur réduite (38) du profil aérodynamique (14).

3. Le procédé de la revendication 1 ou 2, dans lequel le matériau céramique comprend des fibres de carbure de silicium.

4. Le procédé de l'une quelconque des revendications précédentes, dans lequel le mandrin auxétique (10) est formé de graphène.

5. Le procédé de l'une quelconque des revendications 1 à 3, dans lequel le mandrin auxétique (10) est formé de l'un parmi un métal, un polymère, une céramique, et un matériau composite.

6. Le procédé de l'une quelconque des revendications précédentes, dans lequel :
l'étape de densification au moins partielle de la préforme (12) avec une matrice céramique est réalisée en utilisant une infiltration chimique en phase vapeur.

7. Le procédé de l'une quelconque des revendications 1 à 5, dans lequel :
l'étape de densification au moins partielle de la préforme (12) avec une matrice céramique est réalisée en utilisant une infiltration de polymère et pyrolyse ou une infiltration à l'état fondu.

8. Le procédé de l'une quelconque des revendications précédentes, dans lequel :
la force de compression est appliquée sur chacune de la première extrémité de mandrin (30) et de la seconde extrémité de mandrin (32) à la main.

9. Le procédé de l'une quelconque des revendications 1 à 7, dans lequel :
la force de compression est appliquée sur chacune de la première extrémité de mandrin (30) et de la seconde extrémité de mandrin (32) à l'aide d'un outil.

10. Le procédé de la revendication 9, dans lequel l'outil est une pince.

11. Mandrin déformable (10) destiné à être utilisé dans la fabrication d'une préforme d'aube céramique (12), la préforme d'aube comportant une partie creuse, et la partie creuse étant un profil aérodynamique (14) comprenant une première paroi latérale (26), une seconde paroi latérale (24), et une région d'épaisseur réduite (38) entre celles-ci, le mandrin (10) comprenant :
un corps s'étendant le long d'un premier axe entre une première extrémité de mandrin (30) et une seconde extrémité de mandrin (32),
dans lequel le mandrin (10) comprend une région évasée (40) correspondant à une région évasée (36) de la première paroi latérale (26), et
dans lequel le corps est formé d'un matériau auxétique conçu pour se déformer le long d'un second axe orthogonal au premier axe lorsqu'une force uniaxiale est appliquée sur la première extrémité de mandrin (30) et sur la seconde extrémité de mandrin (32) afin de réduire un profil en coupe transversale de la région évasée (40) du mandrin (10) à une valeur inférieure à la région d'épaisseur réduite (38).

12. Le mandrin (10) de la revendication 11, dans lequel :
le matériau auxétique est du graphène.

13. Le mandrin (10) de la revendication 11, dans lequel :
le matériau auxétique est l'un parmi un métal, un polymère, une céramique, et un composite.

14. Le mandrin (10) de l'une quelconque des revendications 11, 12 ou 13, dans lequel le mandrin (10) est adapté pour être utilisé dans un four pour au moins l'un parmi un procédé d'infiltration chimique en phase vapeur, d'infiltration de polymère et pyrolyse, et d'infiltration à l'état fondu.
